# EUROPEAN PATENT SPECIFICATION

(11) **EP 1 416 448 B1**
(45) Date of publication and mention of the grant of the patent: **29.03.2006**
(21) Application number: 02425670.3
(22) Date of filing: 31.10.2002
(51) Int. Cl.: G07F 7/02

(54) **Method for supplying a menu of products from one or more vending machines, and vending machines using said method**
Verfahren zur Verfügungstellung einer Auswahl von Produkten aus einem oder mehreren Verkaufsautomaten, und Verkaufsautomaten welche dieses Verfahren benutzen
Méthode pour fournir un menu de produits à partir d'une ou plusieurs machines de vente, et machines de vente utilisant cette méthode

(43) Date of publication of application: 06.05.2004
(73) Proprietor: Rhea Vendors S.p.A., 21042 Caronno Pertusella VA (IT)
(72) Inventor: Doglioni Majer, Andrea, 20145 Milano (IT)
(74) Representative: Gislon, Gabriele

(56) References cited:
- WO-A-01/86602
- US-A- 5 450 938
- US-A- 5 641 050
- US-B1- 6 397 193

## Description

The present invention relates to a method and an apparatus for supplying a menu of products from one or more vending machines, according to the precharacterizing portion of claim 1 and of claim 7.

It is known that several product such as snacks, sweets and drink cans can be sold from a single vendor (also known as vending machine) or from a group of vending machines (also known as sales points) connected one to the other by means of communication cables, said vending machines being arranged so as to preserve within suitable compartments both hot and cold products.

Such vending machines are equipped with electronic and mechanical selection means enabling to choose among the various products stored therein.

The said electronic selection means are usually a control keyboard associated to a microprocessor, which is provided with a particular software (known as firmware) interacting with the electronic selection means.

The microprocessor is connected to the mechanical selection means so as to control the handling of the products the client choose.

The vending machine can thus supply one or more products selected by the consumer at the same time, as in the case of several vending machines connected one to the other, where each machine supplies a particular product, for instance cold products, such as drinks, or hot products, such as coffee, or confectionery products, such as brioches.

Such supply technique is known as combined sale or menu sale, where said menu consists of several products.

The use of combined supply in a vending machine or in a group of vending machines can increase the sale of the supplied products or allow to use commercial strategies enabling promotions or offers on new products.

The consumer benefits from the fact that, whenever he chooses to buy a menu consisting of one or more products, he carries out a single interaction with the vending machine and above all obtains a reduction on the global price of the products that are part of the menu with respect to buying said products singularly.

Said technique has great advantages also for the companies supplying the products stored within said vending machines. As a matter of fact, said companies can increase sales by combining known products, which are therefore easy to sell, with unknown or new products.

US 5,641,050 describes a machine for dispensing products that permit access using a plurality of payment means including data cards.

However, such a supply technique has some disadvantages, consisting for instance in that the consumer cannot modify the supply mode of the single products once he has selected a menu.

As a matter of fact, when the consumer selects a menu, the vending machine supplies the products contained therein without intervals or breaks between the supply of said products.

A further disadvantage of the selling technique described above also consists in that the menu is strictly established priori by the supplier, so that only the products belonging to the menu selected by the consumer and pre-established by the supplier can be supplied, i.e. only the products that are already associated to a specific menu can be supplied.

US 6,397,193 describes a method for automatically controlling a vending machine to enable a combination of products to be sold during a single transaction.

On the basis of the state of the art as previously described, the present invention aims at carrying out a method for supplying from one or more vending machines a menu comprising several products, which does not have the disadvantages characterizing known supply techniques.

According to the present invention such aim is achieved by means of a method for supplying a menu of products from one or more vendors in accordance with claim 1.

Such aim is also achieved by means of an apparatus for supplying a menu of products from one or more vendors according to claim 7.

The present invention enables to implement a supply technique that can be better customized by a consumer with respect to known supply techniques.

The characteristics and the advantages of the present invention will be evident from the following detailed description of one of its practical embodiments, shown as a mere non-limiting example in the enclosed drawings, in which:
Figure 1 is a front view of a vending machine that can be used for implementing the method according to the present invention;
Figures 1A and 1B show two different credit storage units that can be used according to the present invention;
Figure 2 shows a flowchart of the supply technique according to the present invention.

The following description refers to a single vending machine that can supply cold products such as drinks or hot products such as coffee or confectionery products such as brioches.

Another embodiment provides that the method according to the present invention can be implemented with more than one vending machine, i.e. with a group of vending machines connected one to the other by means of communication cables or also through radiofrequency devices.

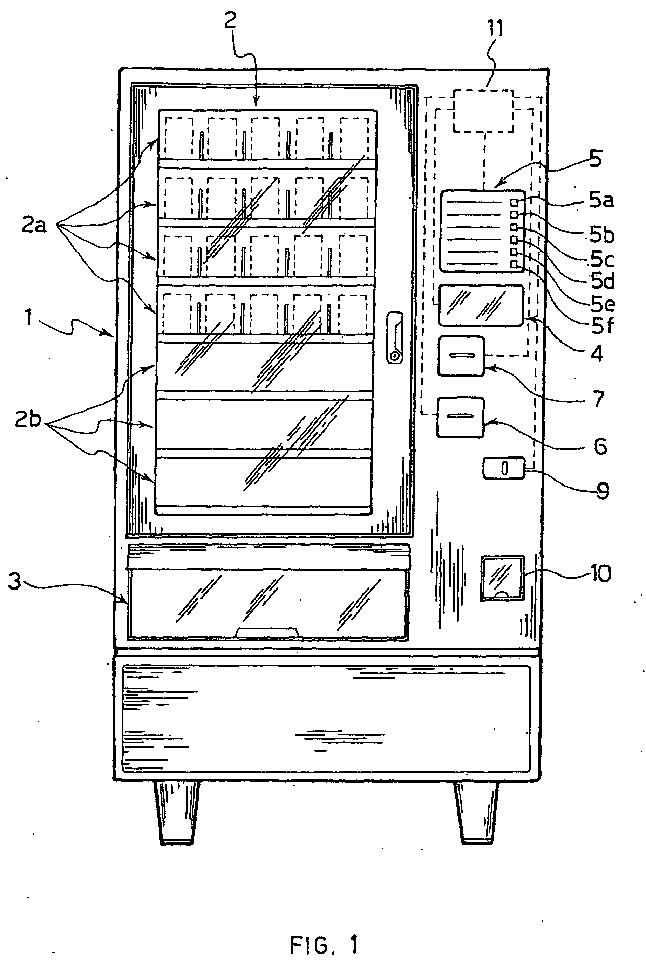

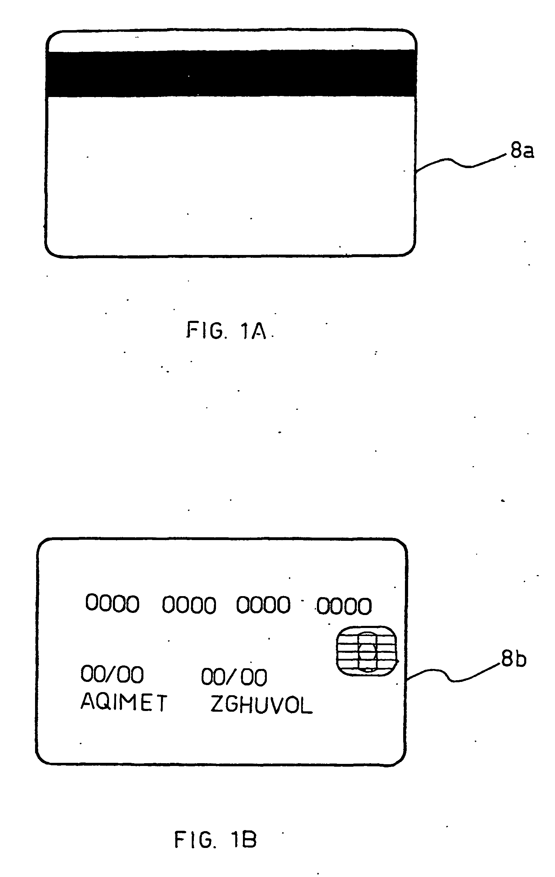

Figure 1 shows a common vending machine 1, which can be used to carry out the supply method according to the present invention.

In particular, in said Figure 1 the vending machine 1 consists of a storage compartment 2, of a supply area 3, of display means 4, of data input means 5, of inlet 6 and release 7 means for a credit storage unit 8a and 8b, of money inlet means 9 and of money return and/or outlet means 10.

The display means 4, the data input means 5, the inlet 6 and release 7 means for a credit storage unit 8a and 8b, the money inlet means 9 are connected to a microprocessor 11, whereas the storage compartment 2 and the supply area 3 are connected to mechanical handling means (not shown in the figures).

The credit storage means 8a and 8b have for instance the size of a common credit card and can be provided with a magnetic band, as shown in figure 1A, or with a chip and a memory, as shown in Figure 1B, obtaining in the first case a very cheap magnetic storage unit and in the second case a storage unit in the form of a smart card.

It should be noted that the unit 8b can also be a key, and subsequently the vending machine 1 will be provided with further inlet means.

Both credit storage means 8a and 8b allow to carry out through the inlet means 6 and under the control of the microprocessor 11 several operations among which operations modifying input values, such as described below.

Referring again to the structure of the vending machine 1, the storage compartment 2 comprises for instance a storage area 2a for snacks or brioches, a refrigerated storage area 2b for canned drinks or bottled water.

Snacks or brioches as well as canned drinks or bottled water are stored, preserved and supplied according to techniques that are well known to skilled technicians and that are therefore not described.

It should be noted that the storage compartment 2 can also contain non-food products such as for instance paper handkerchiefs or toothpaste or toothbrushes etc.

The display means 4 are for instance LCDs (Liquid Crystal Displays) displaying data, time and day of the week and various messages for consumers, technicians and fillers.

The input data means 5 are for instance a plurality of pushbuttons 5a, ..., 5f through which one of the menus 5a, 5b and 5c, for instance MENU I, MENU II or MENU III, or single separate products 5d, 5e, 5f, for instance milk, coffee and tea, can be chosen.

The inlet means 6 for the credit storage unit 8a or 8b can physically receive said different units, read and rewrite the content of the information stored and recorded thereon.

The release means 7 for the credit storage unit can release to the consumer, after the command given by the microprocessor 11, the storage unit 8a or 8b after carrying out thereon reading and/or updating operations on the data stored therein.

It should be noted that the vending machine 1 releases to the consumer only the storage unit 8a, i.e. the unit provided with a magnetic tape, whereas the storage unit 8b should already be in the consumer's hands.

The money inlet means 9 can receive coins so as to load or reload the storage unit 8a or 8b. Thanks to the presence of the microprocessor 11 it occurs that, according to the money inserted, said microprocessor 11 commands the writing of the value corresponding to the inserted money onto the storage unit 8a or 8b.

The money return and/or outlet means 10 are provided in case the money inserted into said inlet means 9 is not correctly recognized, or in case any kind of hindrance has taken place while inserting the money.

The microprocessor 11 is advantageously placed in a protected area within the vending machine 1, for instance it can be protected by a removable wall in stainless steel so as to avoid the contact with powder and possible supply vapors. That same compartment can also house the electronics cards and the other elements dedicated to the control of the vending machine 1.

As was already described, said microprocessor 11 controls the operation of the display means 4, of the data input means 5, of the inlet means 6 for the credit storage unit 8a, of the release means 7 for the credit storage unit 8b, of the money inlet means 9, but it can also control operating times for all the devices constituting the vending machine 1 in a well-known way for a skilled technician.

As was previously said, the vending machine 1 can also be arranged so as to supply both hot and cold soluble drinks, such as for instance coffee or milk beyond hot water and steam for preparing cappuccinos, infusions, etc.

In order to do this, the vending machine 1 should be equipped, beyond the components already described before, with a boiler (not shown in the figure) for generating hot water and steam, with a thermostatic switch (not shown in the figure) keeping at desired values the temperature of water within a special exchanger fitted into said boiler, so as to feed, if needed, the product supply groups.

Moreover, the vending machine 1 is also equipped with further mechanical means (not shown in the figure) collecting a cup, placing it under the various supply elements and receiving the ingredients necessary for preparing the selected drink.

The method according to the present invention allows the consumer to choose for each menu offered by the vending machine 1 among at least two different products, which can be supplied simultaneously or sequentially or in a delayed mode.

The latter mode is particularly advantageous for the consumer, since it enables to buy a complete menu at a price at the most corresponding to the sum of the prices of the single products constituting the menu, though using the products only when needed, i.e. tasting the products that are part of the selected menu at moments chosen by the consumer.

The simultaneous selling mode is known from the prior art and supplies immediately all the products that are part of the selected menu, whereas the sequential selling mode supplies at the same moment the products that are part of the selected menu on several supply elements.

For instance, if a menu consists of a cappuccino, a brioche, a coffee and a drink, in accordance with known supply techniques the consumer would pay for all four products because for instance he is tempted by discounts on the purchase price with respect to the single prices of such products bought separately, but should immediately eat or drink the product supplied by the vending machine or by the group of vending machines connected one the other, even though he does not want to or does not need it.

With the new supply technique, advantageously, once the user has selected the menu with the corresponding products, for instance as was said a cappuccino, a brioche, a coffee and a drink, he chooses which of these products he wants to eat or drink first and above all when during the day. As a matter of fact, the vending machine (or the group), once it has received the money necessary and sufficient for purchasing the selected menu through coin inlet means 9, deducts the price of the single product which the consumer has immediately chosen and releases the credit storage unit through the release means 7.

In other words, the vending machine 1 supplies the selected product and releases the credit storage unit 8a containing the information necessary for determining the remaining credit, such remaining credit being expressed both as money and product units to be supplied, or in the case of the unit 8b, updates the value contained in the memory of the storage unit itself.

Referring now again to the list of products contained in the selected menu, i.e. cappuccino, brioche, coffee and drink, the user can go to the vending machine, insert the necessary credit for buying such menu and, for instance, select cappuccino, let us say early in the morning. The vending machine 1 will supply the cappuccino and release the storage unit 8a, the latter with updated information, or will update the value of the credit storage unit 8b, i.e. by deducting the sum corresponding to the selected product or by deducting a product unit.

The consumer will then go to the vending machine, for instance in the middle of the morning, and by introducing the storage unit 8a or 8b into the corresponding inlet element 6, the microprocessor 11 will check the presence of a sufficient credit and of the products belonging to the selected menu which have not yet been supplied, allowing, if said checks are successful, to select another product, for instance the brioche. The vending machine 1 will then supply the brioche and deduct from the list the corresponding product and credit (always expressed as money or product unit), giving back to the consumer the updated storage unit.

The consumer can thus go to the vending machine 1 two other times and choose which product he shall take until the credit is over or the list of products associated to the menu gets to zero.

The sale is therefore extended over a lapse of time pre-established by the supplier of the products belonging to the menu. Such lapse of time can be for instance twenty-four hours.

Therefore, if the consumer is provided with the storage unit with magnetic tape 8a and if the products belonging to a menu are being supplied, he can take the products remaining in said menu list until the product list does not get to zero.

Once the product list is empty, the storage unit 8a cannot be used anymore.

If the consumer is provided with the storage unit 8b and if the latter contains a sufficient credit or the products belonging to a menu are being supplied, he can choose either to take the products remaining in the selected menu list or to buy another product outside said selected menu, though available in said vendor 1.

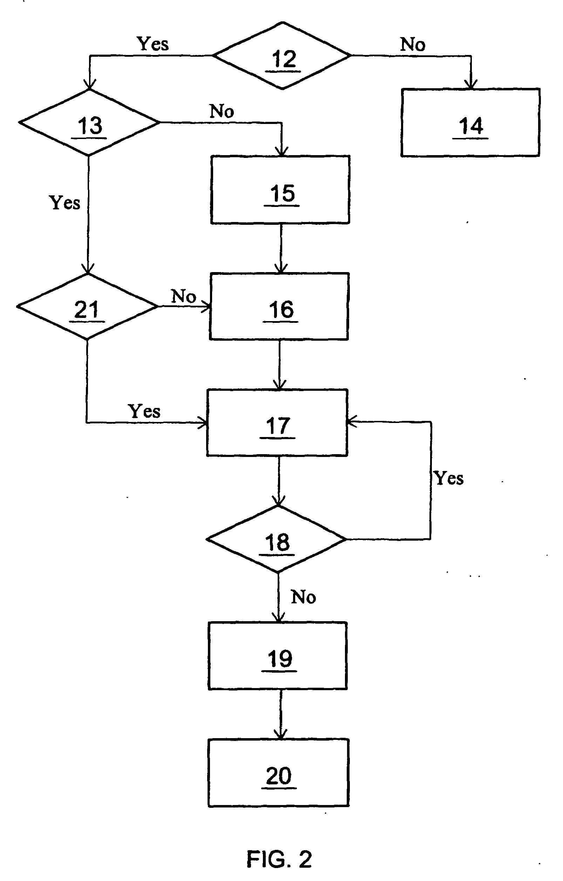

The working of the inventive method that can be applied to the vending machine 1, described above in its main components, will now be disclosed by referring to the flowchart shown in Figure 2, supposing the use of a storage unit such as a smart card or an electronic key.

Supposing further that the vendor is a single vending machine and that the consumer is going to buy a menu (or combined sale) MENU I, MENU II or MENU III by pressing the corresponding key 5a, ..., 5c branch YES of test block 12, the vending machine 1 checks, test block 13, whether the chip (or smart card) credit storage unit 8b is present.

If said credit storage unit is not present, branch NO of block 13, the consumer is asked to insert money, block 15, into the inlet means 9 until the necessary and sufficient value for buying one of the displayed menus is reached, block 16, so as to select one of the product associated to said menus, block 17.

The following example comprising step 18 is to be defined as an example which does not relate to the present invention.

The microprocessor 11 asks the consumer if he wants to take another product, test block 18, and if the latter wants to select another product, branch YES of test block 18, the list of products to be selected is displayed again, block 17.

If the consumer does not want any other product beyond the one or ones already selected, branch NO of test block 18, the vending machine 1 supplies the selected product or products through the supply area 9, block 19, and eventually releases through the release means 7 the updated credit storage unit.

If a credit storage unit has been introduced, branch YES of test block 13, the microprocessor 11 checks whether a selection of menu-associated products is already taking place, test block 21.

If no supply operation is occurring, branch NO of block 21, the flowchart continues from block 16, i.e. the consumer has to choose which menu he shall buy, whereas if the product supply operation is already taking place, branch YES of block 21, the flowchart continues with block 17, i.e. the consumer has to choose which product he shall take from the list of remaining products, or among one of the products outside the previously selected menu, though contained in the vending machine 1.

It should be noted that the microprocessor 11 can always establish which is the actual credit within the credit storage unit 8b, thus allowing the consumer to choose a product that is outside the products associated with the menu selected in block 16.

If the combined sale is not active, branch NO of block 12, the vending machine 1 can supply the single products contained therein, block 14, after the corresponding keys 5d, ... , 5f are pressed.

The flowchart shown in Figure 1 can also apply if the credit storage unit is provided with a magnetic band, although it should be kept in mind that test block 21 leads only to the product selection block 17, i.e. with the credit storage unit 8a the consumer cannot buy anything outside the products belonging to the previously selected menu.

Obviously, in order to meet urgent and specific needs, a person skilled in the art can make several changes and variants to the apparatus as described above; the protection field of the invention is defined by the following claims.

## Claims

1. Method for supplying from at least one vending machine (1) at least a product selected from a menu (MENU I, MENU II; MENU III), each menu comprising a combination of products, said vending machine (1) comprising data input means (5) allowing a selection among said menus, as well as at least a microprocessor (11) operatively managing said at least one vending machine (1) in accordance with said data input means (5), and means of storing onto a storage element (8a, 8b) a credit information,
wherein the consumer inserts in said machine the credit necessary for buying a menu (MENU I, MENU II; MENU III)
**characterized in** comprising the following steps:
- upon selection of a first product of said menu (MENU I, MENU II; MENU III), said machine supplies said first product and releases a storage element (8a, 8b) comprising information about the remaining credit;
- upon subsequent insertion of said storage element in said machine (1) and selection of a further product from the said selected menu (MENU I, MENU II; MENU III) said machine (1) checks the presence of a sufficient credit and of products not yet supplied, to supply said product and deduct the corresponding credit from the said storage element.

2. Method according to claim 1, **characterized in that** said storage element (8a, 8b) comprises further the information of the credit corresponding to the total value.

3. Method according to claim 1, **characterized in that** said storage element (8a, 8b) is a credit storage unit (8a) provided with a magnetic band and controlled by said microprocessor (11).

4. Method according to claim 1, **characterized in that** said storage element (8a, 8b) is a credit storage unit (8b) provided with a chip and a readable and rewritable memory and controlled by said microprocessor (11).

5. Method according to any of the claims 1-4 , **characterized in that** said plurality of products consists of food products.

6. Method according to any of the claims 1-4, **characterized in that** said plurality of products consists of hygienic and sanitary products.

7. Apparatus for selling at least a product selected from a menu, each menu comprising a purality of products, comprising at least one vending machine (1), said at least one vending machine (1) comprising a storage compartment (2), a supply area (3), display means (4), data input means (5), money inlet means (9), and at least a microprocessor (11) connecting said display means (4), said data input means (5), said money inlet means (9),
**characterized in** further comprising release means for releasing a storage element comprising information about a remaining credit after a first supply of a first product of said menu (MENU I, MENU II, MENU III),
and in said at least one microprocessor (11) being programmed for storing onto said storage element (8a, 8b) the composition of said menu so as to supply on demand residual products of said menu of upon subsequent insertion of said storage element in said machine (1) and selection of a further product from the said selected menu (MENU I, MENU II; MENU III).

8. Apparatus for selling according to claim 7, **characterized in that** said storage element (8a, 8b) can be updated by said at least one microprocessor (11) in accordance with said money inlet means (9) and with said data input means (5).

9. Apparatus for selling according to claim 7, **characterized in that** said storage element (8a, 8b) is a credit storage unit (8a) provided with a magnetic band and controlled by said microprocessor (11).

10. Apparatus for selling according to claim 7, **characterized in that** said storage element (8a, 8b) is a credit storage unit (8b) provided with a chip and a readable and rewritable memory and con-trolled by Said microprocessor (11).

11. Apparatus according to any of the claims 7-9, **characterized in that** said plurality of products consists of food products.

12. Apparatus according to any of the claims 7-9, **characterized in that** said plurality of products consists of hygienic and sanitary products.

## Patentansprüche

1. Verfahren zur Bereitstellung wenigstens eines Produkts aus wenigstens einem Verkaufsautomaten (1), ausgewählt aus einem Menü (MENÜ I, MENÜ II, MENÜ III), wobei jedes Menü eine Kombination aus Produkten umfasst, wobei der Verkaufsautomat (1) Hilfsmittel zur Dateneingabe (5) umfasst, die eine Auswahl aus diesen Menüs ermöglichen, und wenigstens einen Mikroprozessor (11), der den Betrieb dieses wenigstens einen Verkaufsautomaten (1) gemäß den Hilfsmitteln zur Dateneingabe (5) wirksam durchführt, sowie Hilfsmittel zum Abspeichern einer Guthabeninformation auf ein Speicherelement (8a, 8b),
wobei der Konsument das zum Kauf des Menüs (MENÜ I, MENÜ II, MENÜ III) notwendige Guthaben in den Automaten eingibt, **dadurch gekennzeichnet, dass** das Verfahren die folgenden Schritte umfasst:
- bei Auswahl eines ersten Produkts aus dem Menu (MENÜ I, MENÜ II, MENÜ III) liefert der Automat das erste Produkt und gibt ein Speicherelement (8a, 8b) aus, das Informationen über das verbleibende Guthaben enthält;
- bei nachfolgender Einführung des Speicherelements in den Automaten (1) und Auswahl eines weiteren Produkts aus dem ausgewählten Menü (MENÜ I, MENÜ II, MENÜ III) wird durch den Automaten (1) geprüft, ob ausreichend Guthaben vorhanden ist und ob es noch nicht gelieferte Produkte gibt, um das Produkt zu liefern und das entsprechende Guthaben vom Speicherelement abzuziehen.

2. Verfahren nach Anspruch 1, **dadurch gekennzeichnet, dass** das Speicherelement (8a, 8b) weitere Informationen zum entsprechenden Gesamtbetrag des Guthabens enthält.

3. Verfahren nach Anspruch 1, **dadurch gekennzeichnet, dass** das Speicherelement (8a, 8b) eine Guthabenspeichereinheit (8a) ist, die mit einem Magnetstreifen versehen ist und durch den Mikroprozessor (11) gesteuert wird.

4. Verfahren nach Anspruch 1, **dadurch gekennzeichnet, dass** das Speicherelement (8a, 8b) eine Guthabenspeichereinheit (8b) ist, die mit einem Chip und einem lesbaren und wiederbeschreibbaren Speicher versehen ist und durch den Mikroprozessor (11) gesteuert wird.

5. Verfahren nach einem der Ansprüche 1 - 4, **dadurch gekennzeichnet, dass** diese mehreren Produkte aus Lebensmittelprodukten bestehen.

6. Verfahren nach einem der Ansprüche 1-4, **dadurch gekennzeichnet, dass** diese mehreren Produkte aus Hygiene- und Sanitärprodukten bestehen.

7. Vorrichtung zum Verkaufen wenigstens eines Produkts, ausgewählt aus einem Menü, wobei jedes Menü mehrere Produkte umfasst, umfassend wenigstens einen Verkaufsautomaten (1), wobei der wenigstens eine Verkaufsautomat (1) ein Vorratsfach (2), einen Bereich für die Ausgabe (3), Hilfsmittel zur Anzeige (4), Hilfsmittel zur Dateneingabe (5), Hilfsmittel zur Geldeingabe (9) und wenigstens einen Mikroprozessor (11) umfasst, der die Hilfsmittel zur Anzeige (4), zur Dateneingabe (5) und zur Geldeingabe (9) verbindet,
**dadurch gekennzeichnet, dass** die Vorrichtung des Weiteren Hilfsmittel zur Ausgabe eines Speicherelements, umfassend Informationen über das verbleibende Guthaben nach einer ersten Lieferung eines ersten Produkts aus dem Menü (MENÜ I, MENÜ II, MENÜ III), umfasst,
und dass der Mikroprozessor (11) so programmiert ist, dass er die Zusammensetzung dieses Menüs auf dem Speicherelement (8a, 8b) speichert, so dass bei Bedarf die übrigen Produkte des Menüs bei späterer Einführung des Speicherelements in den Automaten (1) und Auswahl eines weiteren Produkts aus dem ausgewählten Menü (MENÜ I, MENÜ II, MENÜ III) geliefert werden.

8. Vorrichtung zum Verkaufen nach Anspruch 7, **dadurch gekennzeichnet, dass** das Speicherelement (8a, 8b) durch den wenigstens einen Mikroprozessor (11) gemäß den Hilfsmitteln zur Geldeingabe (9) und den Hilfsmitteln zur Dateneingabe (5) aktualisiert werden kann.

9. Vorrichtung zum Verkaufen nach Anspruch 7, **dadurch gekennzeichnet, dass** das Speicherelement (8a, 8b) eine Guthabenspeichereinheit (8a) ist, die mit einem Magnetstreifen versehen ist und durch den Mikroprozessor (11) gesteuert wird.

10. Vorrichtung zum Verkaufen nach Anspruch 7, **dadurch gekennzeichnet, dass** das Speicherelement (8a, 8b) eine Guthabenspeichereinheit (8a) ist, die mit einem Chip und einem lesbaren und wiederbeschreibbaren Speicher versehen ist und durch den Mikroprozessor (11) gesteuert wird.

11. Vorrichtung nach einem der Ansprüche 7 - 9, **dadurch gekennzeichnet, dass** diese mehreren Produkte aus Lebensmittelprodukten bestehen.

12. Vorrichtung nach einem der Ansprüche 7 - 9, **dadurch gekennzeichnet, dass** diese mehreren Produkte aus Hygiene- und Sanitärprodukten bestehen.

## Revendications

1. Procédé pour fournir à partir d'au moins un distributeur automatique (1), au moins un produit sélectionné dans un menu (MENU I, MENU II ; MENU III), chaque menu comprenant une combinaison de produits, ledit distributeur automatique (1) comportant des moyens d'entrée de données (5) permettant de faire une sélection parmi lesdits menus, ainsi qu'au moins un microprocesseur (11) contrôlant le fonctionnement dudit ou chaque distributeur automatique (1) selon lesdits moyens d'entrée de données (5), et des moyens pour stocker sur un élément de stockage (8a, 8b) des informations de crédit,
dans lequel le consommateur insère dans ledit distributeur le crédit nécessaire pour l'achat d'un menu (MENU I, MENU II ; MENU III),
**caractérisé en ce qu'**il comprend les étapes suivantes :
- en cas de sélection d'un premier produit dudit menu (MENU I, MENU II ; MENU III), ledit distributeur fournit ledit premier produit et libère un élément de stockage (8a, 8b) contenant des informations relatives au crédit restant ;
- en cas d'insertion ultérieure dudit élément de stockage dans ledit distributeur (1) et sélection d'un autre produit dans ledit menu sélectionné (MENU I, MENU II ; MENU III), ledit distributeur (1) vérifie la présence d'un crédit suffisant ainsi que des produits non encore distribués, afin de fournir ledit produit et de déduire le crédit correspondant dudit élément de stockage.

2. Procédé selon la revendication 1, **caractérisé en ce que** ledit élément de stockage (8a, 8b) comprend en outre les informations de crédit correspondant au montant total.

3. Procédé selon la revendication 1, **caractérisé en ce que** ledit élément de stockage (8a, 8b) est un support de stockage d'informations de crédit (8a) comportant une bande magnétique et contrôlé par ledit microprocesseur (11).

4. Procédé selon la revendication 1, **caractérisé en ce que** ledit élément de stockage (8a, 8b) est un support de stockage d'informations de crédit (8b), comportant une puce et une mémoire lisible et réinscriptible, et contrôlé par ledit microprocesseur (11).

5. Procédé selon l'une quelconque des revendications 1-4, **caractérisé en ce que** ladite pluralité de produits consiste en des produits alimentaires.

6. Procédé selon l'une quelconque des revendications 1-4, **caractérisé en ce que** ladite pluralité de produits consiste en des produits d'hygiène et de santé.

7. Appareil pour vendre au moins un produit sélectionné dans un menu, chaque menu comprenant une pluralité de produits, comprenant au moins un distributeur automatique (1), ledit ou chaque distributeur automatique (1) comportant un compartiment de stockage (2), une zone de distribution (3), des moyens d'affichage (4), des moyens d'entrée de données (5), des moyens d'insertion de pièces (9), et au moins un microprocesseur (11) assurant la liaison entre lesdits moyens d'affichage (4), lesdits moyens d'entrée de données (5), et lesdits moyens d'insertion de pièces (9),
**caractérisé en ce qu'**il comprend en outre des moyens de libération pour libérer un élément de stockage contenant des informations relatives à un crédit restant après une première distribution d'un premier produit dudit menu (MENU I, MENU II ; MENU III),
et **en ce que** ledit ou chaque microprocesseur (11) est programmé pour stocker sur ledit élément de stockage (8a, 8b) la composition dudit menu afin de répondre à la demande des produits résiduels dudit menu lors de l'insertion ultérieure dudit élément de stockage dans ledit distributeur (1) et de sélection d'un autre produit dans ledit menu choisi (MENU I, MENU II; MENU III).

8. Appareil de vente selon la revendication 7, **caractérisé en ce que** ledit élément de stockage (8a, 8b) peut être mis à jour par ledit ou chaque microprocesseur (11) en fonction desdits moyens d'insertion de pièces (9) et desdits moyens d'entrée de données (5).

9. Appareil de vente selon la revendication 7, **caractérisé en ce que** ledit élément de stockage (8a, 8b) est un support de stockage d'informations de crédit (8a) comportant une bande magnétique et contrôlé par ledit microprocesseur (11).

10. Appareil de vente selon la revendication 7, **caractérisé en ce que** ledit élément de stockage (8a, 8b) est un support de stockage d'informations de crédit (8b), comportant une puce et une mémoire lisible et réinscriptible, et contrôlé par ledit microprocesseur (11).

11. Appareil selon l'une quelconque des revendications 7-9, **caractérisé en ce que** ladite pluralité de produits consiste en des produits alimentaires.

12. Appareil selon l'une quelconque des revendications 7-9, **caractérisé en ce que** ladite pluralité de produits consiste en produits d'hygiène et de santé.
